# EUROPEAN PATENT SPECIFICATION

(11) **EP 2 987 579 B1**
(45) Date of publication and mention of the grant of the patent: **07.11.2018**
(21) Application number: 15790437.6
(22) Date of filing: 21.05.2015
(51) Int. Cl.: B23K 3/02, B23K 3/03, G01K 7/02, H05B 3/00

(54) **HEATER/SENSOR SUB-ASSEMBLY AND SOLDER CARTRIDGE**
HEIZER-/SENSORBAUGRUPPE UND LÖTKARTUSCHE
SOUS-ENSEMBLE DE DISPOSITIF DE CHAUFFAGE/CAPTEUR ET CARTOUCHE DE SOUDURE

(30) Priority: 28.05.2014 US 201462003952 P; 18.12.2014 US 201414575996
(43) Date of publication of application: 24.02.2016
(73) Proprietor: Hakko Corporation, Osaka-shi, Osaka 556-0024 (JP)
(72) Inventor: MOCHIZUKI, Toshikazu, Osaka-shi Osaka 556-0024 (JP); MATSUZAKI, Kenji, Osaka-shi Osaka 556-0024 (JP); TAKEUCHI, Hitoshi, Osaka-shi Osaka 556-0024 (JP)
(74) Representative: Müller-Boré & Partner Patentanwälte PartG mbB
(86) International application number: PCT/JP2015/064660
(87) International publication number: WO 2015/182487

(56) References cited:
- JP-A- H 038 566
- JP-A- 2004 314 111
- JP-A- 2006 150 365
- JP-U- H02 104 178
- US-A- 1 820 799
- US-A- 6 054 678

## Description

### Technical Field

The present invention relates to a heater and tip assembly for use in soldering and de-soldering systems. More specifically, the present invention relates to a heater-sensor sub-assembly for a soldering iron or de-soldering tool for use environments requiring a soldering tip or de-soldering tip with a high thermal capacity adapted for use in working electrical components designed to allow high current utilization.

### Background Art

Certain specialty automobile electrical parts for use in Electric Vehicles and Hybrid Electric Vehicles as well as power supply components such as power conditioners used in solar power generation require very high thermal capacity when soldering because the required current flow to heat the soldering device is very high, and the parts to be soldered, sometimes referred to as the land of the substrate, are generally large and as a result the parts have a high thermal capacity.

Therefore, in the field of soldering large parts that are designed for high currents, there is a problem in that the solder does not melt properly, or workability is very bad with conventional soldering equipment. The heater sensor complex with a high thermal capacity is required because heater sensor complex can be fabricated with two leads with sensing function.

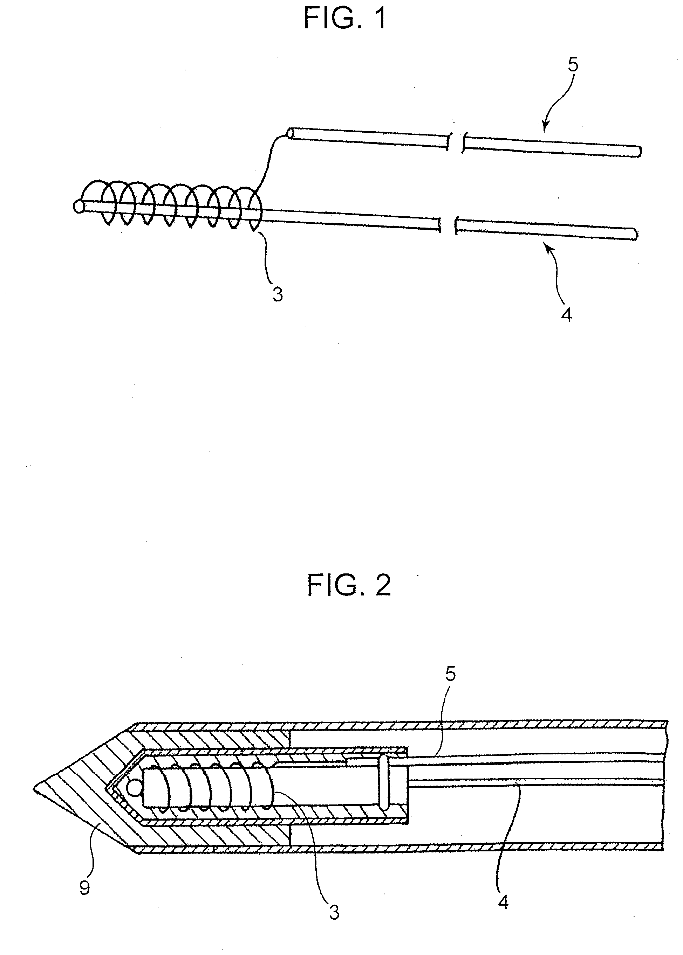

An exemplary prior art soldering iron heater assembly described in U.S. Patent No. 6,054,678 (Japanese Patent 3,124,506), hereby incorporated by reference, is depicted in FIGS. 1 and 2. The principal part of the soldering iron heater according to the prior art included a cylindrical insulating pipe having an axial bore and a heater-sensor complex mounted thereon. The insulating pipe may, for example, be an alumina pipe. FIG. 1 illustrates the main components of the prior art heater-sensor complex, including a distal tip of a coil-shaped heater wire 3 welded to a distal tip of a linear non-heating wire 4 by argon welding. The base or proximal end of the heater wire 3 is welded to a linear non-heating wire 5. The heater wire 3 was made of iron-chromium alloy. Among such iron-chromium alloys, kanthal D (a kanthal wire manufactured by Kanthal Co.) was preferred. The proportions of its principal constituent elements are Fe=73.2, Cr=22.0 and Al=4.8. Such alternative compositions as Cr=22.0, Al=5.8, Cr=22.0, Al=5.3, and Cr=20.0, Al=4.0 can also be employed.

FIG.2 depicts the heater-sensor complex of FIG. 1 as configured in a soldering iron tip assembly. The non-heating wire 4 is passed into and through the bore of an insulating pipe and the heater wire 3 is wound around the periphery of the insulating pipe to form a coil, with the respective distal ends secured together to form a thermocouple. The coil is secured to the insulating pipe and then the heater assembly including the thermal couple is inserted into and secured within a tip 9, having an axial bore that extends over the coil portion of the heater assembly to conduct heat to the distal end of the tip 9. In this configuration, the thermocouple is used to determine the tip temperature and the coil is positioned as close as possible to the distal end of the tip.

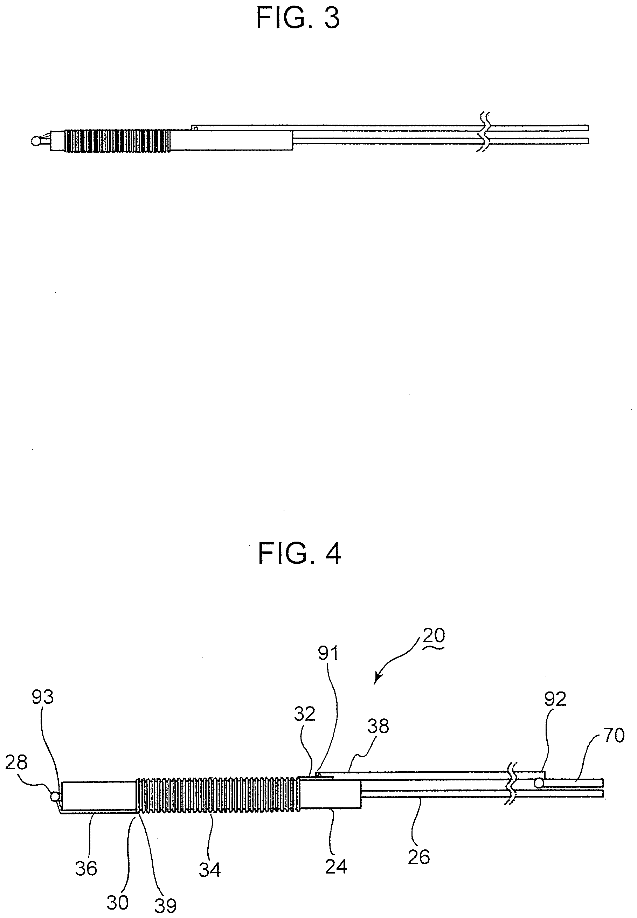

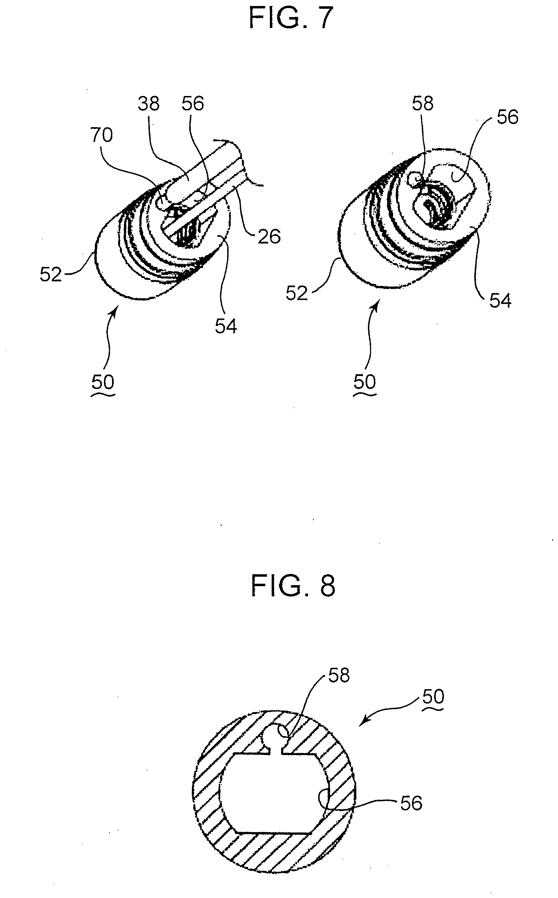

FIG. 3 depicts a mechanical drawing of an exemplary heater-sensor complex made according to the teachings of the prior art of FIGS. 1 and 2, depicting the coil having a length of about 10.5 mm extending proximally from a position about 1.5 mm from the distal end of the insulating pipe and within 3.5 mm of the end of the thermocouple. This assembly was configured for use in the handle assembly as depicted in figure 7 of the 6,054,678 Patent. The products made according to the design have been well received in the marketplace and as a result there are a substantial number of power stations and handles for use with the cartridges having the design in use in the industry. The configuration is very well adapted to use with small works, such as electrical circuit boards and fine wire electrical components. These types of works require precise temperature control of the soldering tip, and rapid heating of the tip by the application of power to the coil.

Patent Document 1: U.S. Patent No. 6,054,678

### Summary of the Invention

While the configuration according to the prior art 6,054,678 Patent has been very well received and exceptionally adapted for use with small works, the soldering cartridges are not as well suited for use with large works, as for example the electrical parts for use in Electric Vehicles and Hybrid Electric Vehicles as well as power supply components such as power conditioners used in solar power generation. Accordingly, the present invention contemplates a soldering cartridge design and heater-sensor assembly having a very high thermal capacity for use with works having large surface areas, and which are useable with the installed base of soldering stations configured for use with the cartridges of the prior design.

The present invention discloses several designs for heater-sensor complexes or subassemblies for soldering cartridges and de-soldering systems having a high thermal capacity and accurate tip temperature sensing and control features. In the configurations of the present invention, the coil portion of the heater assembly is spaced proximally from the distal end of the sub-assembly to segregate the coil from the thermocouple temperature sensor. A solder tip for the cartridge may extend proximally to include a thick annular section surrounding the coil portion of the heater assembly to provide a high thermal capacity. The soldering cartridges may include connector wires of dissimilar sizes and materials to couple the heater coil wire to the connections of a handle and the soldering station to reduce heat conduction to the handle.

The present invention may be used for works having a large surface area or a high thermal capacity.

Objects, features and advantages of the present invention will become more apparent from the following detailed description and the appended drawings.

### Brief Description of the Drawings

FIG. 1 is a schematic drawing of a prior art heater-sensor complex for a soldering cartridge;
FIG.2 is a schematic drawing of the distal end portion of a prior art soldering cartridge using the heater-sensor complex of FIG. 1;
FIG. 3 is a mechanical drawing of components of a heater-sensor sub-assembly that embodied the design of the prior art of FIGS. 1 and 2 used with conventional 70 W soldering systems;
FIG. 4 is a mechanical drawing of components of a heater-sensor sub-assembly according to the present invention;
FIG. 5 is a side view drawing of the heat conducting tip of the soldering cartridge according to the present invention;
FIG. 6 is a mechanical drawing of the heater-sensor sub-assembly and a cross section of the heat conducting tip having an axial bore into which the heater-sensor sub-assembly is inserted for the soldering cartridge according to the present invention;
FIG. 7 is a perspective view of a plug base for positioning the proximal ends of the return wire and connector wire within the insulating pipe according to the present invention;
FIG. 8 is a cross sectional end view of a plug base for positioning the return wire and connector wire within the insulating pipe according to the present invention;
FIG. 9 is a schematic side view drawing of a soldering cartridge according to the present invention;
FIG. 10 is a side view drawing of a soldering cartridge of the present invention and a handle for the soldering cartridge;
FIG. 11 is a side view drawing of a soldering cartridge according to an embodiment of the present invention inserted into a handle to identify various temperature measurement locations;
FIG. 12 is a mechanical drawing of components of a heater-sensor sub-assembly according to a conventional 150 W soldering system application;
FIG. 1 3 is a mechanical drawing of components of a heater-sensor sub-assembly for a 70 W soldering system cartridge of the present invention;

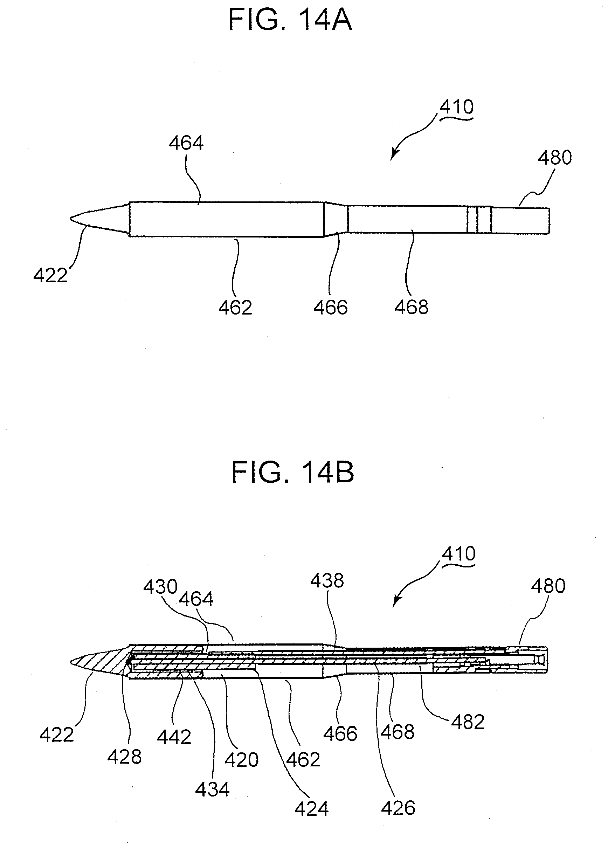

FIG. 14A is a side view of an alternative embodiment of the soldering cartridge according to a conventional 150 W soldering system;
FIG. 14B is a cross sectional view of the alternative embodiment of the soldering cartridge according to the conventional 150 W soldering system;

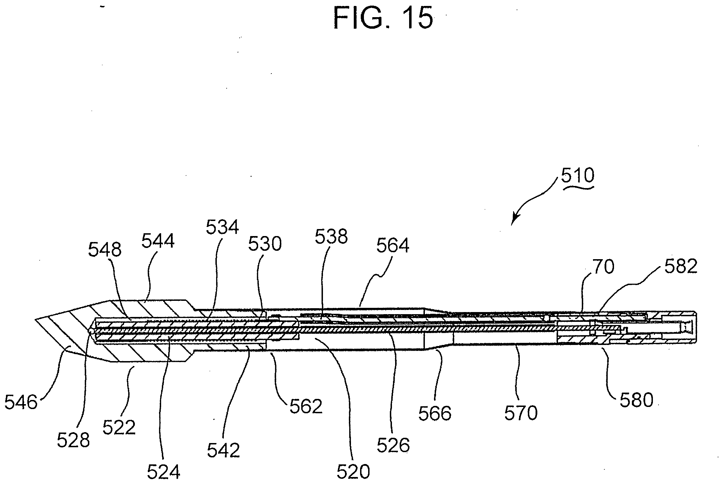

FIG. 15 is a side view and a cross sectional view of an embodiment of the soldering cartridge according to an embodiment of the present invention;

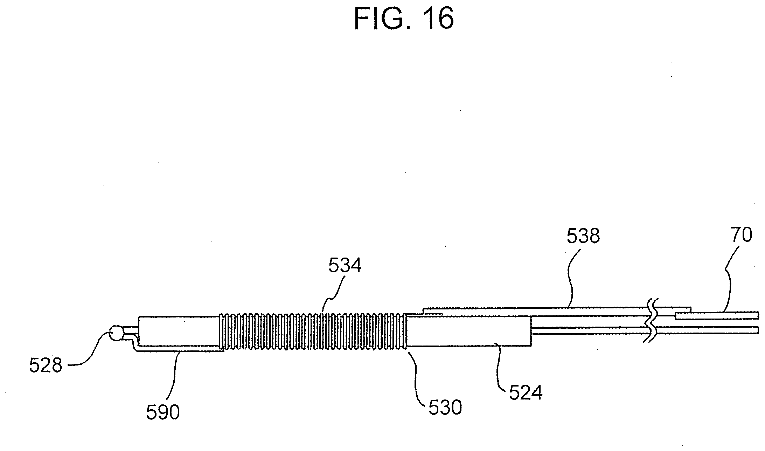

FIG. 16 is another alternative embodiment of the heater-sensor sub-assembly for soldering cartridge according to the present invention;

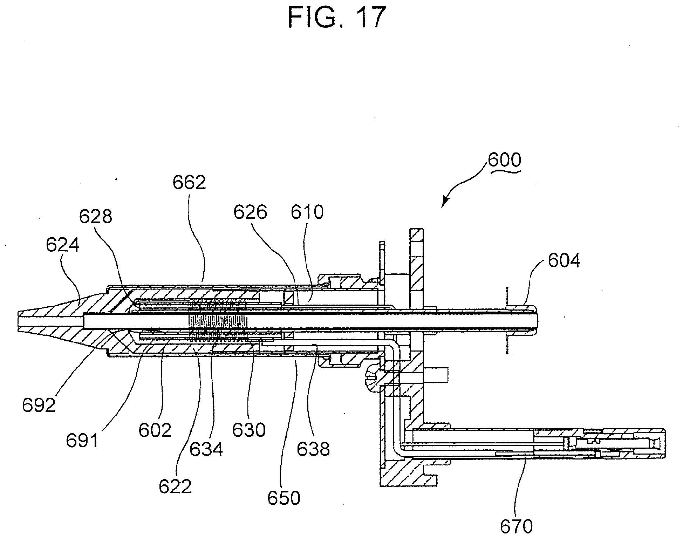

FIG. 17 is a side cross sectional view of a de-soldering assembly using the concepts of the heater-sensor sub-assembly of the present invention;

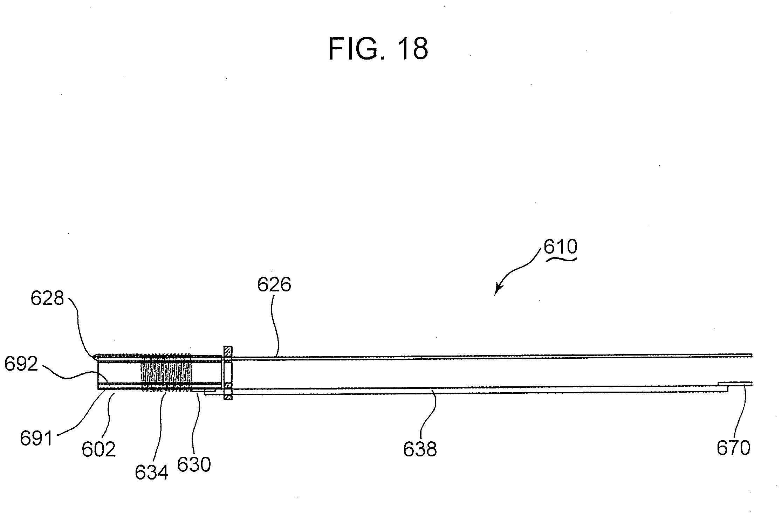

FIG. 18 is a side cross sectional view of the heater-sensor sub-assembly of the de-soldering assembly of FIG. 17 according to an embodiment of the present invention;

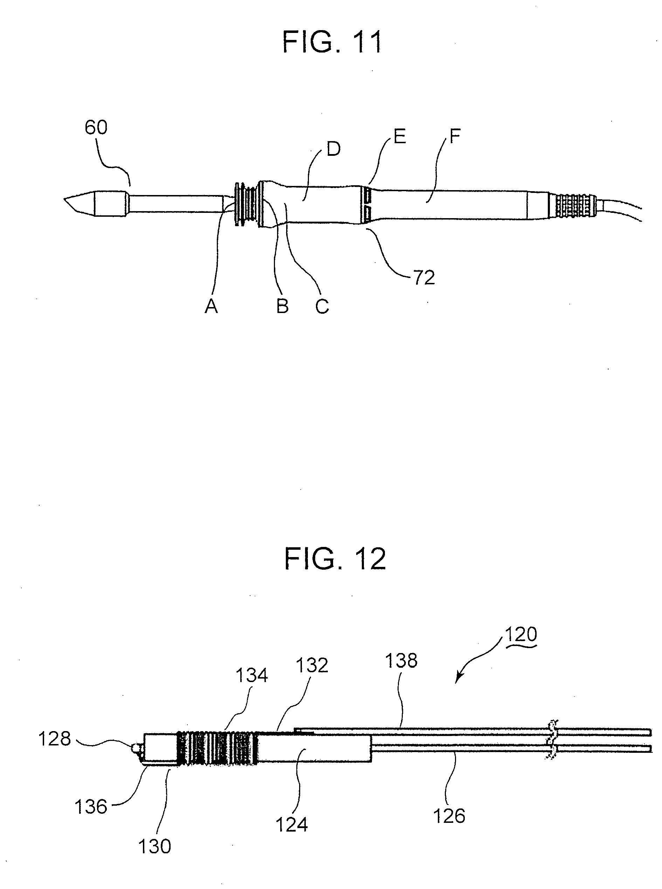

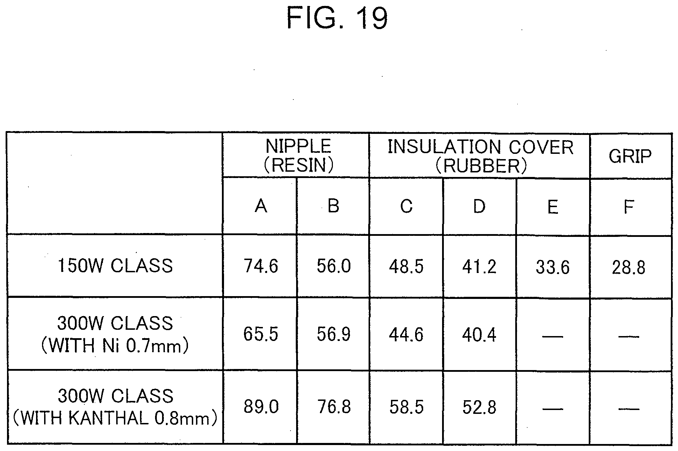

FIG.19 is TABLE showing the temperature measurements for three different cartridge designs at locations depicted in FIG. 11, where the tip was heated to a temperature of 500 °C, and the handle was placed in a holder at a 45° angle;

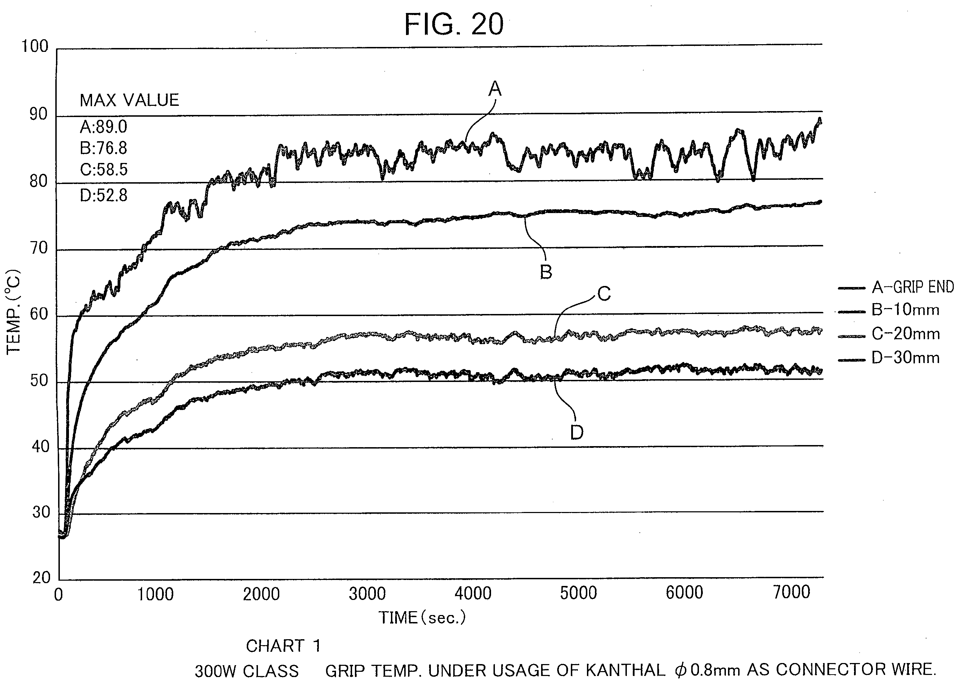

FIG. 20 is CHART 1 showing temperature measurements as a function of time at locations A-D as shown in FIG. 11, graphed for the 300 W soldering cartridge with an iron-chromium alloy connector wire which is 0.8 mm in diameter;

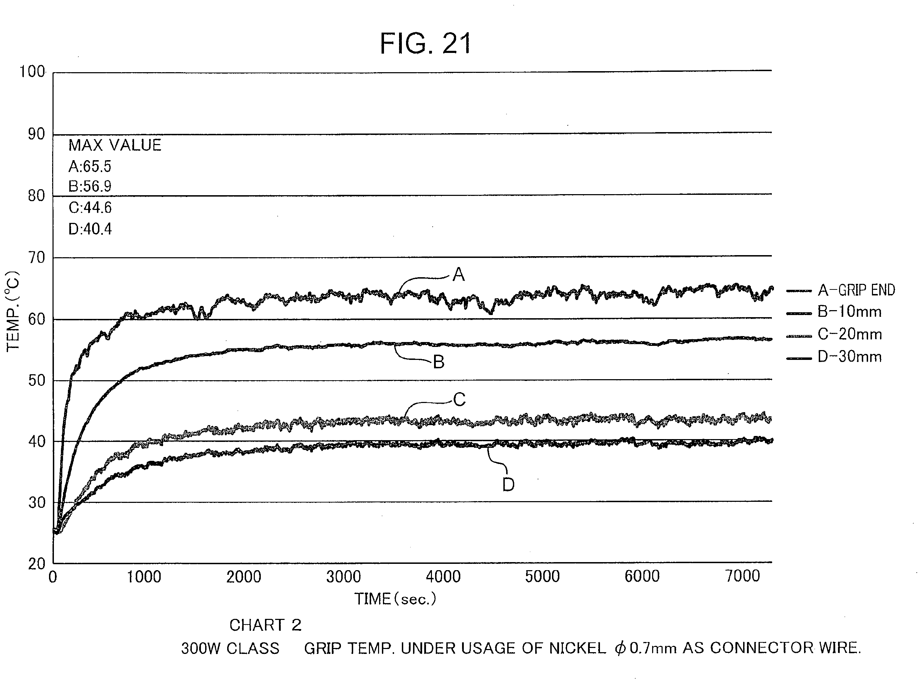

FIG. 21 is CHART 2 showing temperature measurements as a function of time at locations A-D as shown in FIG. 11, graphed for the 300 W soldering cartridge with a nickel connector wire which is 0.7 mm in diameter;

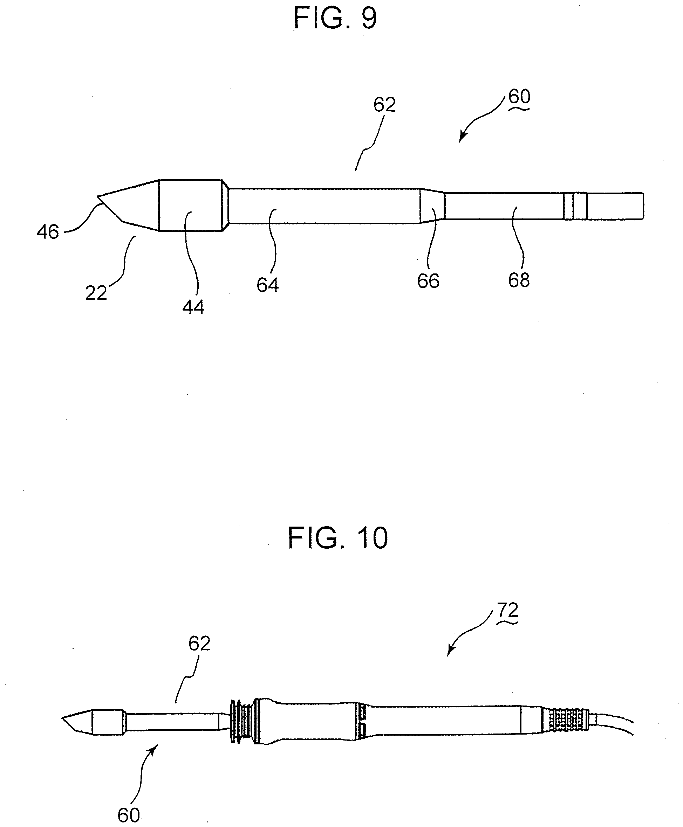

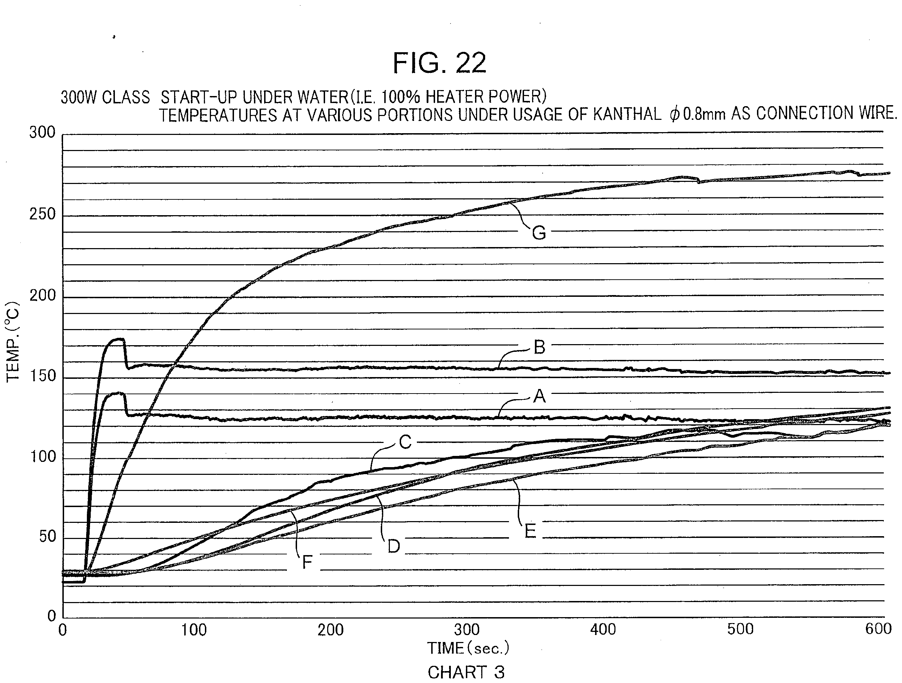

FIG. 22 is CHART 3 showing temperature measurements over time for locations on or inside of the soldering cartridges having a configuration as shown FIGS. 4 and 9 for the 300 W soldering cartridge with an iron-chromium alloy connector wire which is 0.8 mm in diameter;

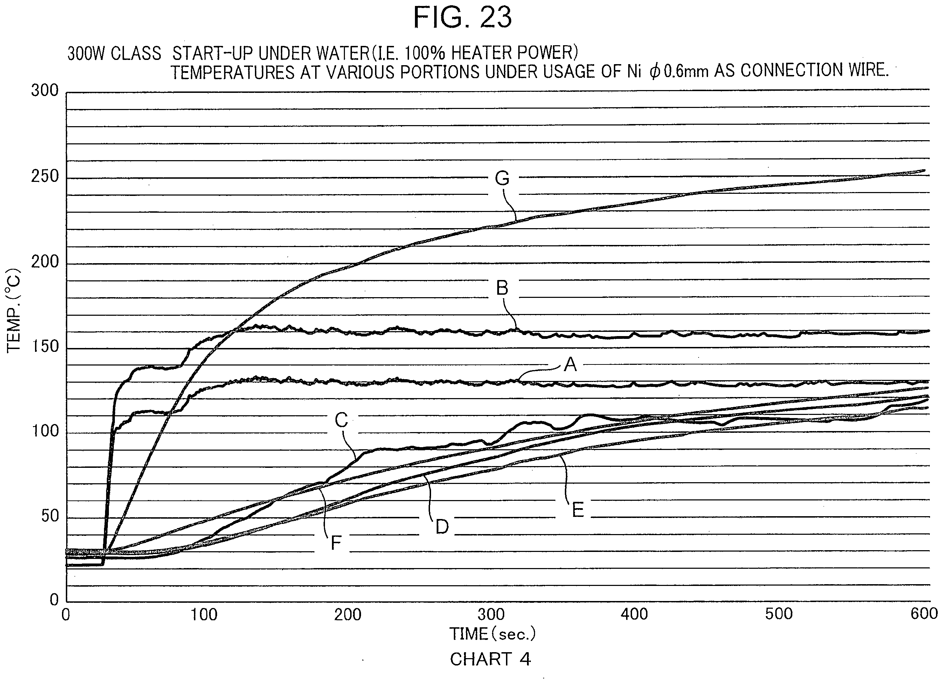

FIG. 23 is CHART 4 showing temperature measurements over time for locations on or inside of the soldering cartridges having a configuration as shown FIGS. 4 and 9 for the 300 W soldering cartridge with a nickel connector wire which is 0.6 mm in diameter;

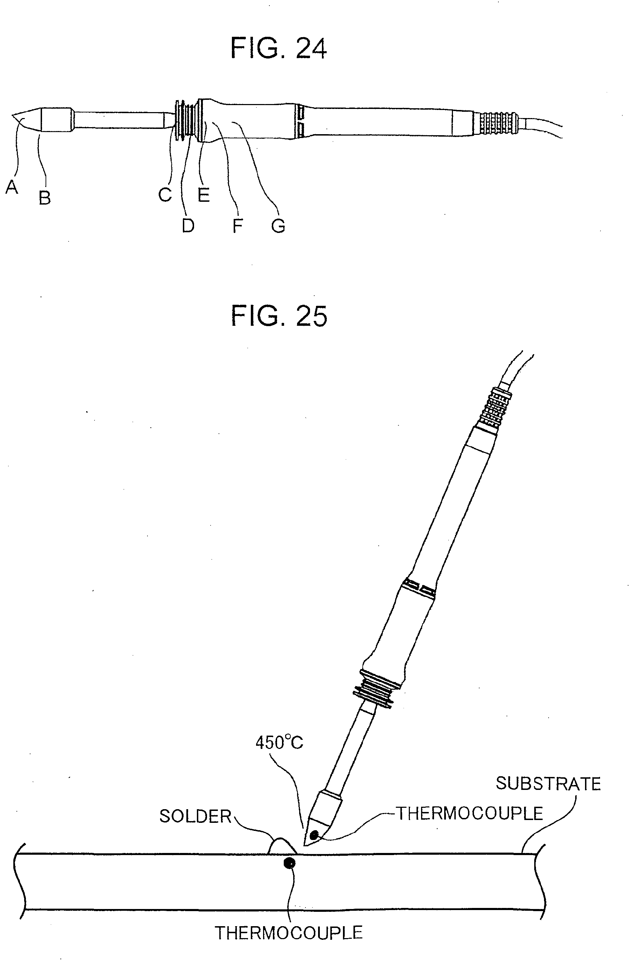

FIG. 24 is a schematic view showing measurement points for temperature data shown in FIGS. 22 and 23;
FIG. 25 is a schematic view showing another experimental method;

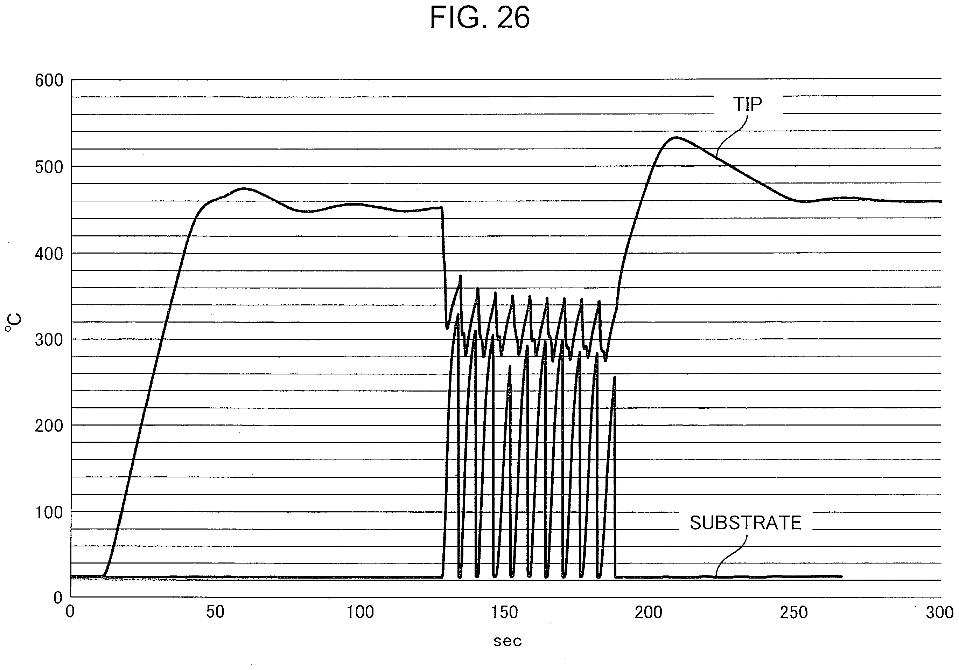

FIG. 26 is a graph showing temperature data obtained from the experimental method shown in FIG. 25;

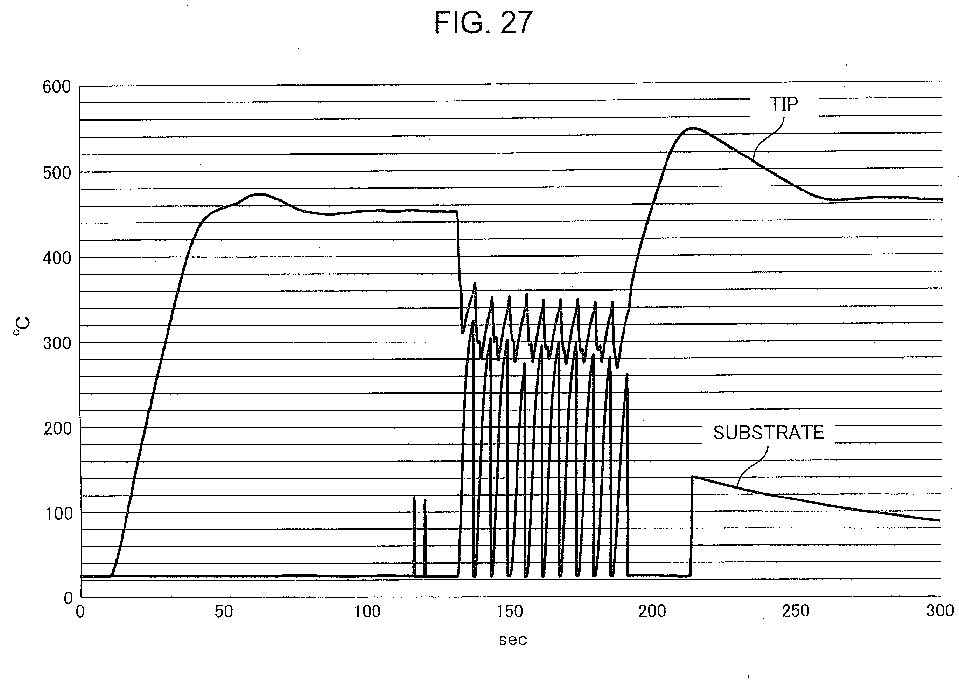

FIG. 27 is a graph showing temperature data obtained from the experimental method shown in FIG. 25; and

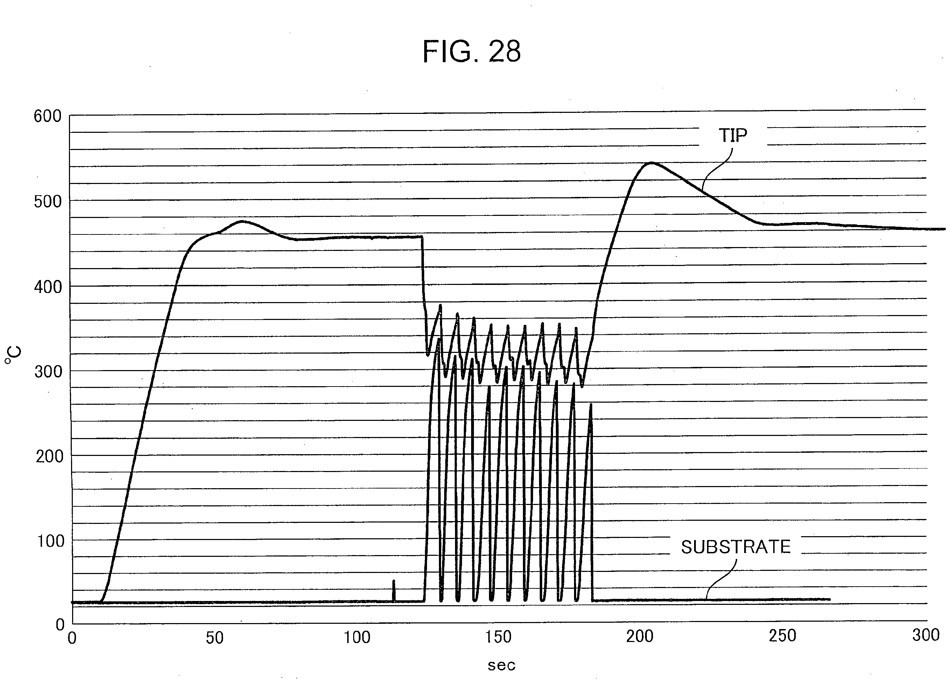

FIG. 28 is a graph showing temperature data obtained from the experimental method shown in FIG. 25.

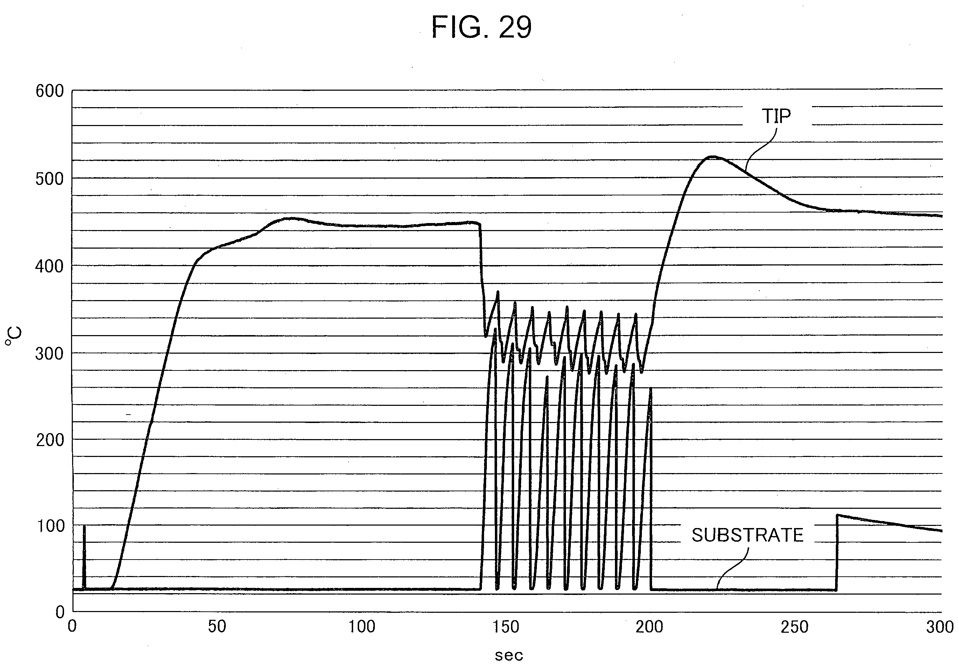

FIG. 29 is a graph showing temperature data obtained from the experimental method shown in FIG. 25.

### DETAILED DESCRIPTION OF THE INVENTION

The design of the prior art heater-sensor sub-assembly and cartridge tip according to the prior art is described above with respect to FIGS. 1-3, and in detail in the U.S. Patent no. 6,054,678 incorporated by reference herein. The design of the prior art heater-sensor sub-assembly for a soldering cartridge configured for use with a 70 W power source is depicted in FIG. 3.

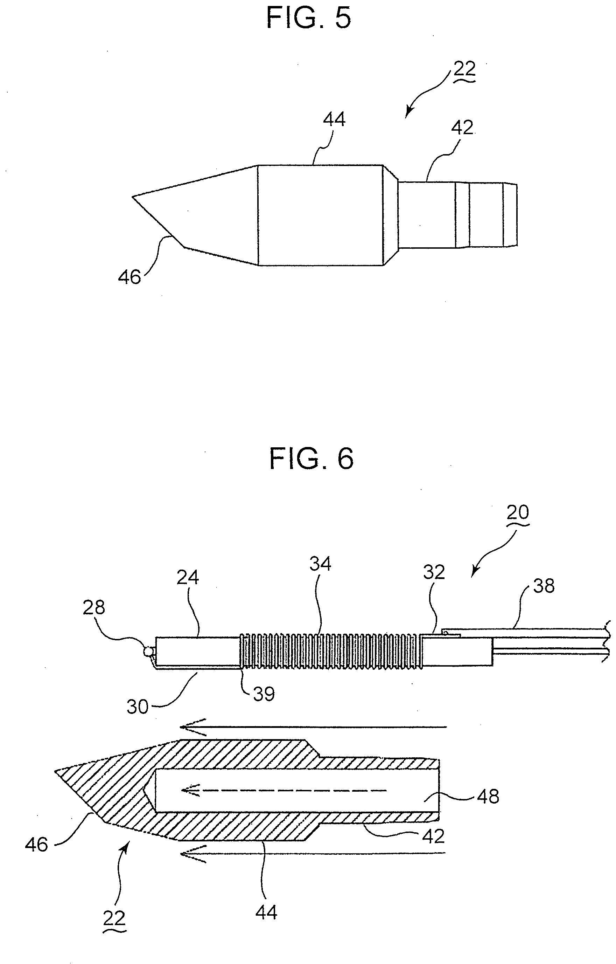

A soldering cartridge according to the present invention includes a heater-sensor sub-assembly 20 according to a first embodiment of the present invention depicted in FIG. 4, and its associated heat conducting tip 22 is depicted in FIG. 5. The heater-sensor sub-assembly 20 includes an insulating pipe 24, return wire 26, thermocouple 28 and a heater wire 30. The heater wire 30 has a proximal portion 32 extending from a proximal location on the insulating pipe 24 to a coil 34, and a distal portion 36 opposite to the proximal portion 32. The coil 34 is wound around the insulating pipe 24 between the proximal portion 32 and the distal portion 36. The insulating pipe 24 preferably has an axial length about twice the axial length of the coil 34. The coil 34 is positioned along the insulating pipe 24 so that the center of the coil 34 in the axial direction is substantially coincident to the center of the insulating pipe 24 in the axial direction. The coil includes a winding wire end 39 which is continuous from the distal portion 36. By this configuration, the winding wire end 39 of the coil 34 is distant from the distal end of the insulating pipe 24 by a half of the length of the coil 34 (e.g. at least 4 mm). Accordingly, the length of the distal portion 36 of the heater wire 30 is about one-half the axial length of the coil 34. In the present embodiment, the distal wire is exemplified by the distal portion 36. The proximal wire is exemplified by the proximal portion 32. The central winding portion is exemplified by the coil 34. The pipe is exemplified by the insulating pipe 24.

The heater wire 30 is preferably formed from iron-chromium alloy wire material, such as "Kanthal" brand wire available from Sandvik Materials Technology based in Sweden. In the present embodiment, the first metallic material is exemplified by the iron-chromium alloy wire material. Alternatively, the first metallic material may be other chromium alloy (e.g. nickel-chromium alloy) than the iron-chromium alloy wire material.

The heater wire 30 preferably has a 0.2 mm to 0.45 mm diameter and the coil 34 has thirty to thirty-two windings and an axial length of about 18 mm to 20 mm. The heater wire 30 is connected at its proximal portion 32 to a conductor 38. In the present embodiment, the first non-heating wire is exemplified by the conductor 38.

The conductor 38 extends roughly parallel to the proximal portion 32 and the return wire 26. The conductor 38 is preferably formed from the same material as the heater wire 30, however, the conductor 38 preferably has a diameter of 0.8 mm to 1.2 mm, or 2 to 4 times the diameter of the heater wire 30. This configuration results in the heat generation upon power application from a power supply to be localized within the coil 34.

The conductor 38 includes a distal end 91 and a proximal end 92 opposite to the distal end 91. As described above, the distal end 91 is connected to the proximal portion 32 of the heater wire 30. FIG. 4 also depicts that it is contemplated that the proximal end 92 of the conductor 38 may be welded to another axially extending connector wire 70. The connector wire 70 is smaller in diameter than the conductor 38 is. In the present embodiment, the first distal portion is exemplified by the distal end 91 of the conductor 38. The first proximal portion is exemplified by the proximal end 92.

As an example, the proximal end 92 of the conductor 38 which is 1.2 mm in diameter may be coupled to the connector wire 70 which is less than 0.8 mm in diameter (e.g. 0.7 mm in diameter), the connector wire 70 being formed from any one of metallic material having a lower volume resistivity than the conductor 38, or the same metallic material as the return wire 26 and nickel or nickel alloy.

The heater-sensor sub-assembly 20 has the non-heating return wire 26 which is at least partially inserted into the insulating pipe 24. The non-heating return wire 26 extends axially through the insulating pipe 24 to the distal end of the insulating pipe 24, where the distal tip 93 of the return wire 26 is welded to the distal tip of the heater wire 30. The return wire 26 is preferably formed from nickel material having a diameter of 0.6 mm being preferred, however, a larger diameter wire can be used. Welding the nickel material of the return wire 26 to the iron-chromium alloy material of the heater wire 30 forms the thermocouple 28, which acts as a temperature sensor. In the present embodiment, the second non-heating wire is exemplified by the return wire 26. The second distal portion is exemplified by the distal end 93 of the return wire 26. The second metallic material is exemplified by nickel material or nickel alloy material.

FIG. 5 depicts a side view of the heat conducting tip 22. The heat conducting tip 22 is preferably formed from material having a high thermal conductivity, such as copper, iron or iron alloy. FIG. 6 shows a cross sectional view of the heat conducting tip 22 as well as the heater-sensor sub-assembly 20. As illustrated in the depictions in FIGS. 5 and 6, the heat conducting tip 22 has a first sleeve portion 42, a central portion 44 and a tip end 46. Solder is adhered to the tip end 46 while the heat conducting tip 22 is used. The central portion 44 is situated between the first sleeve portion 42 and the tip end 46. In the present invention, the sleeve is exemplified by the first sleeve 42.

The heat conducting tip 22 has an axial bore 48 extending through the first sleeve portion 42 and the central portion 44 and into a portion of the tip end 46, although the majority of the tip end 46 is solid. The axial bore 48 is generally cylindrical with the distal end of the axial bore 48 forming a cone shaped indent into the center of the tip end 46 to accept the thermocouple 28 when the heater-sensor sub-assembly 20 is inserted into the axial bore 48 of the heat conducting tip 22.

The heat conducting tip 22 is sized so that when the heater-sensor sub-assembly 20 is inserted into the axial bore 48, the first sleeve portion 42 surrounds the proximal half of the coil 34 and the central portion 44 surrounds the distal half of the coil 34 as well as the exposed distal end of the insulating pipe 24. The central portion has a larger outer diameter than the first sleeve portion 42, to provide a high thermal mass. The heat conducting tip 22 may include beveled or rounded transitions between the respective outer sections. However, the configuration is intended to promote the flow of heat from the portions of the heat conducting tip 22 surrounding the coil 34 distally to the tip end 46.

The design according to FIGS. 4, 5 and 6 is adapted for use as a high thermal capacity soldering cartridge powered by a 300 W power supply. The design according to FIGS. 4, 5 and 6 provides suitable thermal properties for large work soldering and accurate temperature control while avoiding heat influence from the coil 34 on the thermocouple 28, thereby allowing accurate feedback control by the use of the thermocouple 28 as a tip temperature sensor.

In a preferred embodiment, the insulating pipe 24 preferably has an axial length of about 35 mm to 40 mm and the axial length of the coil 34 is about 19 mm. In this embodiment, the winding wire end 39 of the coil 34 is positioned about 10 mm from the thermocouple 28. Also, the proximal portion 32 of the heater wire 30 is welded to a conductor 38 having a diameter 2 to 4 times that of the diameter of the heater wire 30. As shown in FIG. 4, the proximal end 92 of the conductor 38 may be secured to a smaller diameter connector wire 70 formed from different material such as nickel or nickel alloy.

FIGS. 7 and 8 depict a perspective view and a cross sectional view, respectively, of a plug base 50. The plug base 50 is configured to have a proximal end 52 and a distal end 54 that may be inserted into or abut a housing 62 (c.f. FIG. 9) of a stainless steel pipe. The plug base 50 is preferably formed from polyamide material. The plug base 50 has an axial, part cylinder shaped cutout section 56 and a generally cylindrical shaped cutout 58 offset from the center axis of the plug base 50. The connector wire 70 is sized to fit into the cutout 58 while the return wire 26 is positioned coaxially in the center of the plug base 50.

FIG. 9 is a side view of the assembled soldering cartridge 60 of the present invention. As depicted in FIG. 9, the soldering cartridge 60 has the central portion 44 and a tip end 46 of the heat conducting tip 22 at the distal end of the soldering cartridge 60. The first sleeve portion 42 (c.f. FIG. 5) of the heat conducting tip 22 is encased in a housing 62.

The housing 62 may have a first diameter portion 64 at its distal end sized so as to securely receive the first sleeve portion 42 of the heat conducting tip 22, a tapering portion 66 near its center, and a proximal cylindrical section 68 having an outer diameter properly dimensioned to a diameter of about 5.5 mm for use in existing handles. The first diameter portion 64 is fixed to the heat conducting tip 22. The proximal cylindrical section 68 may also include at least two electrical contacts for interconnecting the proximal ends of the return wire 26 and the connector wire 70 (c.f. FIG. 4) to electrical contacts in the handle (not shown). The housing 62 is preferably formed from stainless steel to provide rigidity and yet not conduct heat proximally toward the handle. In the present invention, the distal portion is exemplified by the first diameter portion 64.

FIG. 10 depicts the soldering cartridge 60 with the proximal cylindrical section 68 of the housing 62 inserted into a standard handle 72. As depicted, the reduced diameter of the proximal cylindrical section 68 (c.f. FIG. 9) of the housing 62 is necessary to allow the cartridge 60 to be used with existing handles. It is contemplated that the handle may be redesigned to receive a larger diameter cartridge, whereby the housing 62 of the soldering cartridge 60 may be formed of a uniform diameter tube.

The standard handle 72 may be a general slim handle piece which is used for a soldering iron configured to heat by 150 W power. Since the connector wire 70 described with reference to FIG. 4 reduces heat to be transmitted to the hand of an operator through the standard handle 72, the operator may proceed with soldering operation for a long time without interference with an excessively high temperature even if the soldering cartridge 60 is designed so as to connect with bigger power than 150 W. Since the operator can use the usual standard handle 72, the operator may efficiently execute soldering operation for a work with a high heat capacity.

Since the connector wire 70 is thinner than the conductor 38, a handle piece which was used for an existing soldering iron may be used as the standard handle 72, so the plug which was used for the existing soldering iron is connected to the connector wire. Therefore, the soldering cartridge 60 is incorporated into the standard handle 72. Accordingly, the soldering iron may be fabricated with low cost.

FIG. 11 depicts a standard soldering cartridge inserted into a handle with positions A-F on the handle identified where sensors were positioned to allow measurements of temperatures at various locations for the soldering cartridges of the present invention. The measurements of the respective temperatures for the various cartridges are tabulated in TABLE 1 (c.f. Fig. 19), discussed below.

FIG. 12 depicts a conventional 150 W soldering system heater-sensor sub-assembly 120. The heater-sensor sub-assembly 120 has the non-heating return wire 126 extending axially through the insulating pipe 124 to the distal end of the insulating pipe 124, where the distal tip of the return wire 126 is welded to the distal tip of the heater wire 130. The return wire 126 is preferably formed from nickel material having a diameter of 0.6 mm being preferred, however, a larger diameter wire can be used. Welding the nickel material of the return wire 126 to the iron-chromium alloy material of the heater wire 130 forms the thermocouple 128, which acts as a temperature sensor. The heater wire 130 has a proximal portion 132 extending from a proximal location on the insulating pipe 124 to a coil 134, and a distal portion 136. The coil 134 is wound around the insulating pipe 124.

The insulating pipe 124 preferably has an axial length about twice the axial length of the coil 134. In this embodiment, the coil 134 is positioned from the center of the insulating pipe 124 distally 8 to 10 mm, ending about 5 mm from the thermocouple 128. The proximal end of the heater wire 130 is welded to a conductor 138 having a diameter two to four times that of the diameter of the heater wire 130.

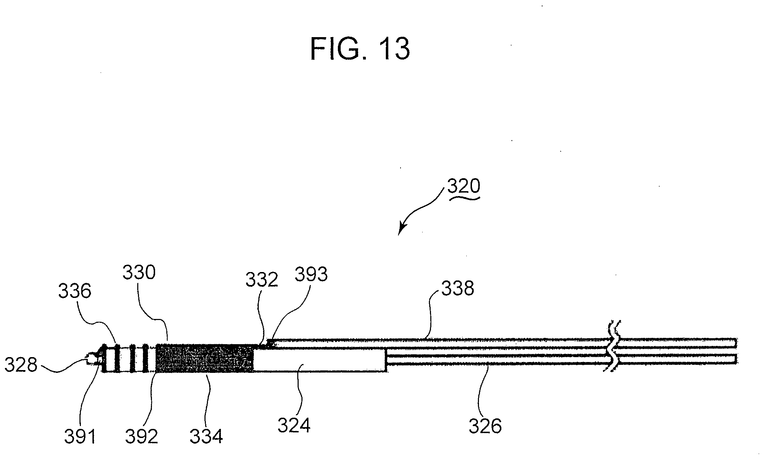

FIG. 13 depicts an improved version of a 70 W solder system heater-sensor sub-assembly 320. The heater-sensor sub-assembly 320 has the non-heating return wire 326 extending axially through the insulating pipe 324 to the distal end of the insulating pipe 324, where the distal 391 of the return wire 326 is welded to the distal 336 of the heater wire 330. The return wire 326 is preferably formed from nickel material having a diameter of 0.6 mm being preferred, however, a larger diameter wire can be used. Welding the nickel material of the return wire 326 to the iron-chromium alloy material of the heater wire 330 forms the thermocouple 328, which acts as a temperature sensor. The heater wire 330 has a proximal portion 332 extending from a proximal location on the insulating pipe 324 to a coil 334 and a distal portion 336.

The heater wire 330 includes the proximal portion 332, which extends the proximal location on the insulating pipe 324 to the coil 334, and a distal portion 336 opposite to the proximal portion 332. The coil 334 between the proximal portion 332 and the distal portion 336 is wound around the insulating pipe 324. The coil 334 includes a winding wire end 392 which is continuous to the distal end 336 of the heater wire 330.

The insulating pipe 324 preferably has an axial length about 25 mm to 30 mm and the axial length of the coil 334 is about 8 mm. In this embodiment, the winding wire end 392 of the coil 334 is positioned about 6.5 mm from the thermocouple 328.

The heater-sensor sub-assembly 320 includes a conductor 338. The conductor 338 includes a distal portion 393 which is connected to the proximal portion 332 of the heater wire 330. The proximal end 332 of the heater wire 330 is welded to the conductor 338 having a diameter two to four times that of the diameter of the heater wire 330. Like the heater wire 330, the conductor 338 may be formed from iron-chromium alloy. For example, the heater wire 330 may be no less than 0.2 mm but no more than 0.45 mm in diameter. Between the thermocouple 328 at the distal end of the insulating pipe 324 and the winding wire end 392 of the coil 334, the heater wire 330 may have a wider pitch of 1.2 mm for the last four windings.

FIG. 14A is a side view of a heater-sensor sub-assembly 420 as components of a conventional 150 W soldering cartridge 410. FIG. 14B is a side cross-sectional view of the heater-sensor sub-assembly 420 as components of the conventional 150 W soldering cartridge 410. In the side view of FIG. 14A, the distal tip portion of the heat conducting tip 422 at the distal end of the soldering cartridge 410 is depicted extending from the housing 462. The housing 462 includes a distal cylindrical section 464 and a proximal cylindrical section 468 and a central transition 466 therebetween. The proximal cylindrical section 468 terminates at a connector assembly 480. The housing 462 is preferably made from a rigid metallic material with low heating conducting capacity such as stainless steel.

As depicted in the cross sectional view of FIG. 14B, the heat conducting tip includes a sleeve portion 442 having a hollow cylindrical cross section that is press fit into the inner diameter of the distal cylindrical section 464 of the housing 462. The sleeve portion 442 of the heat conducting tip 422 encases the distal end of the heater-sensor sub-assembly 420, with the proximal end of the sleeve portion 442 extending at least to the proximal end of a coil portion 434 of the heater wire 430 of the heater-sensor sub-assembly 420. As described with respect to the heater-sensor sub-assembly embodiments above, the distal end of the coil 434 is spaced from the thermocouple 428 at the distal tip of the heater-sensor sub-assembly 420 by a length of about one-half the axial length of the coil 434. The coil 434 is wrapped about an insulating pipe 424. The return wire 426 passing axially through the insulating pipe 424 is preferably formed from nickel material having a diameter of 0.6 mm being preferred, however, a larger diameter wire can be used. The heater wire 430 is preferably formed from 0.3 mm diameter iron-chromium alloy material. The proximal end of the heater wire 430 is welded to a conductor 43 8, also preferably formed from iron-chromium alloy material, but preferably having a diameter 0.8 mm so that heat generated at the coil 434 is localized to the vicinity of the coil 434 because of the smaller diameter the heater wire 430 as compared to the diameter of the conductor 438. The conductor 43 8 and the return wire 426 may be enclosed inside of an insulating tube 482 made of polytetrafluoroethylene or polyimide within the proximal cylindrical section 468 of the housing 462.

FIG. 15 is a side-cross sectional view showing an embodiment of a heater-sensor sub-assembly 520 of the present invention as components of a 300 W soldering cartridge 510. The distal tip portion of the heat conducting tip 522 at the distal end of the soldering cartridge 510 is depicted extending from the housing 562. The housing 562 includes a first distal cylindrical section 564, a transitional section 566 and a proximal cylindrical section 570. The proximal cylindrical section 570 terminates at a connector assembly 580. The housing 562 is preferably made from rigid metallic material with a low heating conducting capacity such as stainless steel.

As depicted in the cross sectional view of FIG. 15, the heat conducting tip 522 has a first sleeve portion 542, a central portion 544 and a tip end 546. The heat conducting tip 522 has an axial bore 548 extending through the first sleeve portion 542 and central portion 544, and then into a portion of the tip end 546, although the majority of the tip end 546 is solid. The axial bore 548 is generally cylindrical with the distal end of the axial bore 548 forming a cone shaped indent into the center of the tip end 546 to accept a thermocouple 528 when the heater-sensor sub-assembly 520 is inserted into the axial bore 548 of the heat conducting tip 522.

The heat conducting tip 522 is sized so that when the heater-sensor sub-assembly 520 is inserted into the axial bore 548, the first sleeve portion 542 surrounds the proximal half of a coil 534 and the central portion 544 surrounds the distal half of the coil 534 as well as the exposed distal end of the insulating pipe 524. The central portion 544 has a larger outer diameter than the first sleeve portion 542, to provide a high thermal mass. The heat conducting tip 522 may include beveled or rounded transitions between the respective outer sections. However, the configuration is intended to promote the flow of heat from the portions of the heat conducting tip 522 surrounding the coil 534 distally to the tip end 546.

As described with respect to the heater-sensor sub-assembly embodiments above, the distal end of the coil 534 is spaced from the thermocouple 528 at the distal tip of the heater-sensor sub assembly. The coil 534 is wrapped about an insulating pipe 524. The return wire 526 passing axially through the insulating pipe 524 is preferably formed from nickel material having a diameter of 0.6 mm being preferred, however, a larger diameter wire can be used. The heater wire 530 is preferably formed from 0.4 mm to 0.45 mm diameter iron-chromium alloy material. The proximal end of the heater wire 530 is welded to a conductor 538, also preferably formed from iron-chromium alloy material, but preferably having a diameter 1.2 mm so that heat generated at the coil 534 is localized to the vicinity of the coil 534 because of the smaller diameter the heater wire 530 as compared to the diameter of the conductor 538.

The conductor 538 is connected at a proximal end to a connector wire 70 preferably made of metallic material having lower volume resistivity than the conductor 538, or nickel or nickel alloy. The connector wire 70 and the return wire 526 may be enclosed inside of an insulating tube 582 made of polyimide or polytetrafluoroethylene material. The insulating tube 582 is positioned within the proximal cylindrical section 570 of the housing 562. The connector wire 70 and the return wire 526 terminate in a connector assembly 580.

FIG. 16 depicts an alternative embodiment of the heater-sensor sub-assembly that may be used in the soldering cartridge 510 (c.f. FIG. 15). The heater-sensor sub-assembly of FIG. 16 includes the heater wire 530 and its coil 534 wound about an insulating pipe 524. The proximal end of the heater wire 530 is welded to a larger diameter conductor 538 than the heater wire 530, the conductor 538 being made from the same material as the heater wire 530. Preferably, the heater wire 530 is 0.4 mm to 0.45 mm diameter iron-chromium alloy and the conductor 538 is 1.2 mm diameter iron-chromium alloy.

The distal end of the coil 534 is spaced 10 mm to 12 mm from a thermocouple 528 at the distal tip of the heater-sensor sub-assembly. A distal wire 590 extending between the thermocouple 528 and coil 534 is made of the same material as the material of the heater wire 530, thus preferably iron-chromium alloy. The heater wire 530 is connected to the distal wire 590 having a larger diameter than that of the heater wire 530. Thus, for the heater wire 530 having a preferred diameter of 0.4 mm, the distal wire 590 has a preferred diameter of at least 0.5 mm, and preferably in the range 0.5 mm to 0.7 mm. The larger diameter of the distal wire 590 reduces heat generation within the distal wire 590 and also reduces heat transfer from the coil 534 to the thermocouple 528 along the distal wire 590. Also as depicted in FIG. 16, the conductor 538 is connected at a proximal end to a connector wire 70 preferably made of nickel or nickel alloy.

FIGS. 17 and 18 depict an alternative configuration of the heater-sensor sub-assembly 610 adapted for use in a de-soldering assembly 600. The heater-sensor sub-assembly 610 as depicted in FIGS. 17 and 18 must be adapted to allow solder that is liquefied by the heating tip to pass through a central tube 602 that is connected at its distal end to a negative pressure source or vacuum. Accordingly, the return wire cannot be co-axially mounted within an insulating tube or pipe. Accordingly, as depicted, the heater wire 630 has a coil 634 wrapped around a metallic or ceramic hollow central tube 602. The central tube 602 includes an outer circumferential surface 691 and an inner circumferential surface 692. The heater wire 630 surrounds the outer circumferential surface 691 so as to form the coil 634. The inner circumferential surface 692 defines a suction path for the liquefied solder. A return wire 626 is preferably a nickel wire that may be a flat wire including an insulator laid along the outer circumference of the hollow central tube 602 under the coil 634, extending to the direction of the longitudinal axis of the central tube 602 between the inner circumferential surface 692 and the coil 634, or pass through an aperture formed through the wall of the central tube 602. The return wire 626 extends from the coil 634 to the distal end of the central tube 602, preferably by an axial length of between 0.5 to 1 times the axial length of the coil 634. In the present invention, the hollow tube is exemplified by the central tube 602. The second non-heating wire is exemplified by the return wire 626.

The heater wire 630 has a distal portion extending from the distal end of the coil 634 which terminates in a connection to the distal end of the return wire 626 to form a thermocouple 628 spaced from the distal end of the coil 634.

The heater-sensor sub-assembly 610 is inserted into an axial recess of a heat conducting member 622 which either extends to a nozzle tip 624. Alternatively, the heat conducting member 622 may terminate at its distal end with a flat or cone shaped surface which mates with a similar flat or cone shaped surface at the proximal end of a replaceable nozzle 624. The heat conducting member 622 and the nozzle 624 are preferably formed from high heat conductivity material such as copper or iron. The heat conducting member 622 and a portion of the nozzle 624 are constrained within a housing 662 formed from low thermal conducting material such as stainless steel.

The coil 634 of the heater wire 630 is preferably formed from an iron-chromium alloy wire having a diameter of 0.3 mm to 0.45 mm. The proximal end of the heater wire 630 may be connected to a conductor 638 of the same material but having a diameter significantly larger than the diameter of the heater wire 630, for example, the conductor 638 may have a diameter of 0.6 mm to 1.2 mm. The proximal end of the conductor 638 may itself be connected to a connector wire 670 formed of different material, for example, nickel or nickel alloy material which may have a diameter less than the diameter of the conductor 638. For example, when the conductor 638 has a diameter of 1.2 mm, the connector wire 670 may have a diameter of 0.7 mm. Also, the distal end of the heater wire 630 may be connected to a distal wire formed of a similar material but having a diameter larger than that of the heater wire 630.

The de-soldering assembly 600 further includes a base assembly 650 with electrical contacts for the respective return wire 626 and conductor 638 or connector wire 670, to connect them to a power supply (not shown). The proximal end of a pipe extending through the central tube 602 has a nipple 604 adapted to be connected to a negative pressure or vacuum (not shown).

The configurations of the present invention described above are particularly beneficial in focusing heat generation toward the distal end of the soldering tip (or de-soldering nozzle) and reducing the heating of the handle assembly for high power 300 W soldering systems and for isolating the temperature sensing thermocouple from the heating coil so that the measured temperature more accurately reflects the actual temperature of the soldering tip (or de-soldering nozzle). With respect to minimizing the heat transfer toward the proximal end of the soldering cartridges, referring again to FIG. 11, a standard handle 72 with an associated soldering cartridge 60 is depicted.

FIG. 11 also includes the identification points of six locations, marked A, B, C, D, E and F where temperature measurements were taken for three different cartridge designs. The identification point A is put on the distal end of a resin nipple portion to which a taper portion 66 is inserted. The identification point B is put on the proximal end of the nipple portion (the distance from the identification point A: around 10 mm). The identification point C is put on the distal end of a rubber insulation cover which surrounds a cylindrical portion 68 (the distance from the identification point A: around 20 mm). The identification point D is put on the central portion of the insulation cover (the distance from the identification point A: around 30 mm). The identification point E is put on the proximal end of the insulation cover. The identification point F is put on a position closer to the proximal end of a handle than where the identification point E is placed.

In each case, the tip was heated to a temperature of 500 °C, and the handle was placed in a holder at a 45° angle. The results of the testing are tabulated in Table 1. As reflected in the results of the temperature measurements in Table 1, the addition of the nickel connector wire 70 (c.f. FIG. 4) at the proximal end of the 1.2 mm diameter conductor extending from the heater wire results in a substantial decrease in the temperatures measured at the locations A-D for a 300 W power supply soldering cartridge even as compared to using 0.8 mm diameter iron-chromium alloy material for the connector wire 70. The temperatures for the 300 W cartridge having the nickel wire were even less than the temperature measurements of a 150 W cartridge which did not include the nickel connector wire.

The test comparison as between the 300 W soldering cartridge with the 0.8 mm diameter iron-chromium alloy connector wire and the 300 W soldering cartridge with the 0.7 mm diameter nickel connector wire are further reflected in the appended Charts 1 and 2 (c.f. FIGS. 20 and 21), which show various temperature measurements as a function of time. In Chart 1, the temperature measurements at locations A-D are graphed for the 300 W soldering cartridge with the 0.8 mm diameter iron-chromium alloy connector wire.

In Chart 2, the temperature measurements at locations A-D are graphed for the 300 W soldering cartridge with the 0.7 mm diameter nickel connector wire. As reflected in these graphs, the respective temperatures are all lower for the nickel connector wire designs, demonstrating the advantage of the use of the nickel over the iron-chromium alloy even though the nickel wire has a smaller diameter. These graphs also show that the temperatures stabilize after about 2,000 seconds.

To further illustrate the differences as between the 300 W soldering cartridge with the 0.8 mm diameter iron-chromium alloy connector wire and the 300 W soldering cartridge with the 0.6 mm diameter nickel connector wire, the appended Charts 3 and 4 (c.f. FIGS. 22 and 23) graph various temperature measurements over time for locations on or inside of the soldering cartridges having a configuration as shown in FIGS. 4, 9 and 15. FIG. 24 schematically shows the positions of the identification points A to G depicted in FIGS. 22 and 23. The identification point A is a measurement point on a surface of an iron tip which is distant by around 6.5 mm from the iron tip end. The identification point B is a measurement point which is distant by 2 to 3 mm from the identification point A. The identification point C is set on an outer surface of the nipple. The identification point D is a measurement point which is set inside the nipple. The identification point E is a measurement point set on an outer surface at the distal end of a handle cover which is connected to the nipple. The identification point F is a measurement point set inside the handle cover. The identification point G is a measurement point set at a position on the housing 62 of the cartridge 60, the position being in correspondence to the conductor 38 and the connector wire 70 described with reference to FIG. 4.

The Charts 3 and 4 are based on measurements taken when the tip of the soldering cartridge is placed under water and the desired tip temperature is set to 500 °C for a 300 W soldering cartridge. Chart 3 shows the graphs for a soldering cartridge having a 0.8 mm diameter iron-chromium alloy connector wire. Chart 4 shows the graphs for a soldering cartridge having a 0.6 mm diameter nickel connector wire. The submerged tip temperatures of both cartridges stabilized at about 125 °C, as shown in the identification point A. The temperature measurements at various locations along the length of the soldering cartridges were similar with the nickel connector wire cartridge generally lower. However, at the location of the joinder of the 1.2 mm diameter iron-chromium alloy conductor to either the 0.8 mm diameter iron-chromium alloy connector wire (Chart 3) or the 0.6 mm diameter nickel connector wire (Chart 4), the soldering cartridge having the nickel connector wire was consistently about 20 °C cooler than the iron-chromium alloy connector wire cartridge as shown in the identification point G.

FIG. 25 is a schematic view showing another test conducted by the present inventor. The soldering cartridge shown in FIG. 25 internally includes the heater-sensor sub-assembly described with reference to FIG. 16.

The present inventor attached a thermocouple to both substrate and soldering tip end. The present inventor then set a temperature of the tip end at 450 °C to conduct soldering.

Each of FIGS. 26 to 29 is a chart showing a temperature change which is measured by the thermocouple during soldering. Data of each of FIGS. 26 to 29 is obtained from a soldering cartridge with the coil 534 and the distal wire 590 made from an iron-chromium wire. The data of each of FIGS. 26 to 29 is, however, obtained under conditions different in dimension of the coil 534 and the distal wire 590.

With regard to the data of FIG. 26, the coil wire 534 was 0.4 mm in diameter. The distal wire 590 was 0.5 mm in diameter. The distal wire 590 was 11 mm in length (i.e. the distance from the thermocouple 528 to the coil 534).

With regard to the data of FIG. 27, the coil wire was 0.45 mm in diameter. The distal wire 590 was 0.45 mm in diameter. The distal wire 590 was 11 mm in length.

With regard to the data of FIG. 28, the coil wire 534 was 0.45 mm in diameter. The distal wire 590 was 0.45 mm in diameter. The distal wire 590 was 9 mm in length.

With regard to the data of FIG. 29, the coil wire 534 was 0.45 mm in diameter. The distal wire 590 was 0.45 mm in diameter. The distal wire 590 was 6 mm in length.

There is no significant data difference among FIGS. 26 to 29. It was verified that the heater wire 530 of which diameter is less than 0.45 mm was appropriately used since the soldering was appropriately conducted during the data sampling of FIGS. 26 to 29. Further, it was confirmed by testing that heater wire 530 of diameter less than 0.2 mm was impractical if used with a high power supply at a 300 W class, since it is likely to occur heater break of the heater wire 530.

It was verified by the present test that the soldering was appropriately conducted even when the distance from the thermocouple 528 to the coil 534 exceeded 5 mm.

The term "heater wire" used in the aforementioned description may mean a wire capable of generating heat high enough to melt solder. The term "non-heating wire" does not mean a wire causing no heat during electrical power supplied but means a general wire which generates much less heat than what the heater wire generates. These definitions for "heater wire" and "non-heating wire" are intended to make the aforementioned explanation easily understood but do not limit the aforementioned technical principles. Therefore, other definitions may be given to "heater wire" and "non-heating wire".

Those skilled in the art will readily appreciate that the disclosure herein is meant to be exemplary and actual parameters and materials depend upon the specific application for which the process and materials of the present invention are used. The foregoing embodiments are presented by way of example such that the scope of the invention is defined only by the appended claims.

### Industrial Applicability

The principles of the aforementioned embodiments may be a variety of technical fields in which solder is used.

## Claims

1. A heater-sensor sub-assembly (20; 520; 610) comprising:
a pipe (24; 524; 602);
a heater wire (30; 530; 630) made of first metallic material, the heater wire (30; 530; 630) including a distal wire (36; 590) forming a thermocouple (28; 528; 628), a proximal wire (32) opposite to the distal wire (36; 590), and forming a central winding portion (34; 534; 634) wrapped around the pipe (24; 524; 602) between the distal wire (36; 590) and the proximal wire (32);
a first non-heating wire (38; 538; 638) made of the first metallic material, the first non-heating wire (38; 538; 638) including a first distal portion (91) connected to the proximal wire (32), and a first proximal portion (92) opposite to the first distal portion (91); and
a second non-heating wire (26; 526; 626) made of second metallic material, the second non-heating wire (26; 526; 626) including a second distal portion (93) connected to the distal wire (36; 590) so as to form the thermocouple (28; 528; 628);
**characterized in that**
the heater-sensor sub-assembly (20; 520; 610) further comprises a third non-heating wire (70; 670) connected to the first proximal portion (92), wherein
the third non-heating wire (70; 670) is formed from a metallic material identical to the second metallic material or a metallic material having lower volume resistivity than the first metallic material.

2. The heater-sensor sub-assembly (20; 520; 610) according to claim 1,
wherein the pipe (24; 524; 602) is an insulating pipe (24; 524; 602), and
the second non-heating wire (26; 526; 626) is at least partially inserted into the insulating pipe (24; 524; 602).

3. The heater-sensor sub-assembly (20; 520; 610) according to claim 1 or 2,
wherein the first metallic material is chromium alloy material, and
the second metallic material is nickel or nickel alloy material.

4. The heater-sensor sub-assembly (20; 520; 610) according to any one of claims 1 to 3,
wherein the first non-heating wire (38; 538; 638) has a diameter from 2 to 4 times larger than a diameter of the heater wire (30; 530; 630).

5. The heater-sensor sub-assembly (20; 520; 610) according to any one of claims 1 to 4,
wherein the third non-heating wire (70; 670) is smaller in diameter than the first non-heating wire (38; 538; 638).

6. The heater-sensor sub-assembly (20; 520; 610) according to any one of claims 1 to 5,
wherein the central winding portion (34; 534; 634) has approximately half a length of the pipe (24; 524; 602), and
a central position of the central winding portion (34; 534; 634) in an axial direction substantially corresponds to a central position of the pipe (24; 524; 602) in an axial direction.

7. The heater-sensor sub-assembly (20; 520; 610) according to any one of claims 1 to 6,
wherein the distal wire (36; 590) is made of a wire thicker than the first metallic material forming the central winding portion (34; 534; 634).

8. The heater-sensor sub-assembly (20; 520; 610) according to any one of claims 1 to 7,
wherein the first non-heating wire (38; 538; 638) is no less than 0.8 mm but no more than 1.2 mm in diameter,
the heater wire (30; 530; 630) is no less than 0.2 mm but no more than 0.45 mm in diameter,
the third non-heating wire (70; 670) is no more than 0.8 mm in diameter.

9. The heater-sensor sub-assembly (20; 520; 610) according to any one of claims 1 to 8,
wherein the central winding portion (34; 534; 634) is no less than 18 mm but no more than 20 mm in axial length, the central winding portion (34; 534; 634) being distant from the thermocouple (28; 528; 628) by at least 4 mm.

10. The heater-sensor sub-assembly (20; 520; 610) according to any one of claims 1 to 9,
wherein the pipe (24; 524; 602) is no less than about 35 mm but no more than about 40 mm in axial length,
the central winding portion (34; 534; 634) is about 19 mm in axial length, the central winding portion (34; 534; 634) including a winding wire end continuous from the distal wire (36; 590), and
wherein the winding wire end is distant from the thermocouple (28; 528; 628) by about 10 mm.

11. The heater-sensor sub-assembly (610) according to claim 1,
wherein the pipe (602) is a hollow tube (602) defining a solder suction path, and
wherein the second non-heating wire (626) extends in an axial direction of the hollow tube at a position deviated from the solder suction path.

12. A soldering cartridge (60; 510) comprising:
a tip (22; 522; 624) used for soldering;
a housing (62; 562; 662) including a distal end portion (64; 564) fixed to the tip (22; 522; 624), and a proximal end portion (68; 570) having at least two electrical contacts;
the heater-sensor sub-assembly (20; 520; 610) according to any one of claims 1 to 11;
wherein the heater-sensor sub-assembly (20; 520; 610) is installed in the housing (62; 562; 662).

13. The soldering cartridge (60; 510) according to claim 12,
wherein the tip (22; 522; 624) includes a tip end (46; 546) where solder is applied, a sleeve (542) connected to the housing (62; 562; 662), and a central portion (544) between the tip end (46; 546) and the sleeve (542), and
the tip end (46; 546), the sleeve (542) and the central portion (544) define an axial bore in which the heater-sensor sub-assembly (20; 520; 610) is stored.

## Patentansprüche

1. Eine Heizer-Sensor-Unterbaugruppe (20; 520; 610), die Folgendes umfasst:
ein Rohr (24; 524; 602);
einen Heizdraht (30; 530; 630) aus einem ersten metallischen Werkstoff, wobei der Heizdraht (30; 530; 630) einen distalen Draht (36; 590) aufweist, der ein Thermoelement (28; 528; 628) bildet, einen proximalen Draht (32), der dem distalen Draht (36; 590) entgegengesetzt ist, und einen zentralen Wickelabschnitt (34; 534; 634) bildet, der um das Rohr (24; 524; 602) zwischen dem distalen Draht (36; 590) und dem proximalen Draht (32) gewickelt ist;
einen ersten nicht heizenden Draht (38; 538; 638) aus dem ersten metallischen Werkstoff, wobei der erste nicht heizende Draht (38; 538; 638) einen ersten distalen Abschnitt (91), der mit dem proximalen Draht (32) verbunden ist, und einen ersten proximalen Abschnitt (92) aufweist, der dem ersten distalen Abschnitt (91) entgegengesetzt ist; und
einen zweiten nicht heizenden Draht (26; 526; 626) aus einem zweiten metallischen Werkstoff, wobei der zweite nicht heizende Draht (26; 526; 626) einen zweiten distalen Abschnitt (93) aufweist, der mit dem distalen Draht (36; 590) verbunden ist, um das Thermoelement (28; 528; 628) zu bilden;
**dadurch gekennzeichnet, dass**
die Heizer-Sensor-Unterbaugruppe (20; 520; 610) ferner einen dritten nicht heizenden Draht (70; 670) umfasst, der mit dem ersten proximalen Abschnitt (92) verbunden ist, wobei
der dritte nicht heizende Draht (70; 670) aus einem metallischen Werkstoff besteht, der mit dem zweiten metallischen Werkstoff identisch ist oder aus einem metallischen Werkstoff mit einem geringeren spezifischen Durchgangswiderstand als der erste metallische Werkstoff.

2. Die Heizer-Sensor-Unterbaugruppe (20; 520; 610) nach Anspruch 1, wobei das Rohr (24; 524; 602) ein isolierendes Rohr (24; 524; 602) ist, und wobei
der zweite nicht heizende Draht (26; 526; 626) zumindest teilweise in das isolierende Rohr (24; 524; 602) eingeführt ist.

3. Die Heizer-Sensor-Unterbaugruppe (20; 520; 610) nach Anspruch 1 oder 2,
wobei der erste metallische Werkstoff eine Chromlegierung ist, und wobei der zweite metallische Werkstoff Nickel oder eine Nickellegierung ist.

4. Die Heizer-Sensor-Unterbaugruppe (20; 520; 610) nach irgendeinem der Ansprüche von 1 bis 3,
wobei der erste nicht heizende Draht (38; 538; 638) einen Durchmesser aufweist, der 2 bis 4 mal größer ist als ein Durchmesser des Heizdrahtes (30; 530; 630).

5. Die Heizer-Sensor-Unterbaugruppe (20; 520; 610) nach irgendeinem der Ansprüche von 1 bis 4,
wobei der dritte nicht heizende Draht (70; 670) dem Durchmesser nach kleiner ist als der erste nicht heizende Draht (38; 538; 638).

6. Die Heizer-Sensor-Unterbaugruppe (20; 520; 610) nach irgendeinem der Ansprüche von 1 bis 5,
wobei der zentrale Wickelabschnitt (34; 534; 634) etwa eine halbe Länge des Rohres (24; 524; 602) aufweist, und wobei
eine zentrale Position des zentralen Wickelabschnitts (34; 534; 634) in einer axialen Richtung im Wesentlichen einer zentralen Position des Rohrs (24; 524; 602) in einer axialen Richtung entspricht.

7. Die Heizer-Sensor-Unterbaugruppe (20; :520; 610) nach irgendeinem der Ansprüche von 1 bis 6,
wobei der distale Draht (36; 590) aus einem Draht besteht, der dicker ist als der erste metallische Werkstoff, der den zentralen Wickelabschnitt (34; 534; 634) bildet.

8. Die Heizer-Sensor-Unterbaugruppe (20; 520; 610) nach irgendeinem der Ansprüche von 1 bis 7,
wobei der erste nicht heizende Draht (38; 538; 638) nicht weniger als 0,8 mm, aber nicht mehr als 1,2 mm Durchmesser hat,
der Heizdraht (30; 530; 630) nicht weniger als 0,2 mm, aber nicht mehr als 0,45 mm Durchmesser hat,
der dritte nicht heizende Draht (70; 670) nicht mehr als 0,8 mm Durchmesser hat.

9. Die Heizer-Sensor-Unterbaugruppe (20; 520; 610) nach irgendeinem der Ansprüche von 1 bis 8,
wobei der zentrale Wickelabschnitt (34; 534; 634) nicht weniger als 18 mm, aber nicht mehr als 20 mm in axialer Länge beträgt, wobei der zentrale Wickelabschnitt (34; 534; 634) um mindestens 4 mm von dem Thermoelement (28; 528; 628) entfernt ist.

10. Die Heizer-Sensor-Unterbaugruppe (20; 520; 610) nach irgendeinem der Ansprüche von 1 bis 9,
wobei das Rohr (24; 524; 602) nicht weniger als etwa 35 mm, aber nicht mehr als etwa 40 mm in axialer Länge beträgt,
der zentrale Wickelabschnitt (34; 534; 634) etwa 19 mm in axialer Länge beträgt, wobei der zentrale Wickelabschnitt (34; 534; 634) ein vom distalen Draht (36; 590) durchgehendes Wickeldrahtende beinhaltet, und
wobei das Wickeldrahtende etwa 10 mm vom Thermoelement (28; 528; 628) entfernt ist.

11. Die Heizer-Sensor-Unterbaugruppe (610) nach Anspruch 1,
wobei das Rohr (602) ein hohles Rohr (602) ist, das einen Lotsaugweg definiert, und
wobei der zweite nicht heizende Draht (626) in einer axialen Richtung des hohlen Rohres an einer vom Lotsaugweg abweichenden Position verläuft.

12. Eine Lötpatrone (60; 510), die Folgendes umfasst:
eine Spitze (22; 522; 624), die zum Löten verwendet wird;
ein Gehäuse (62; 562; 662), das einen distalen Endabschnitt (64; 564) beinhaltet, der an der Spitze (22; 522; 624) befestigt ist, und einem proximalen Endabschnitt (68; 570) mit mindestens zwei elektrischen Kontakten;
die Heizer-Sensor-Unterbaugruppe (20; 520; 610) nach irgendeinem der Ansprüche von 1 bis 11;
wobei die Heizer-Sensor-Unterbaugruppe (20; 520; 610) im Gehäuse (62; 562; 662) eingebaut ist.

13. Die Lötpatrone (60; 510) nach Anspruch 12,
wobei die Spitze (22; 522; 624) Folgendes aufweist: ein Spitzenende (46; 546), an dem Lot aufgebracht wird, eine mit dem Gehäuse (62; 562; 662) verbundene Hülse (542) und einen Mittelabschnitt (544) zwischen dem Spitzenende (46; 546) und der Hülse (542), und wobei
das Spitzenende (46; 546), die Hülse (542) und der Mittelabschnitt (544) eine axiale Bohrung definieren, in der die Heizer-Sensor-Unterbaugruppe (20; 520; 610) gelagert ist.

## Revendications

1. Un sous-ensemble chauffage-capteur (20 ; 520 ; 610) comprenant :
un tuyau (24 ; 524 ; 602) ;
un fil de chauffage (30 ; 530 ; 630) en un premier matériau métallique, le fil de chauffage (30 ; 530 ; 630) incluant un fil distal (36 ; 590) formant un thermocouple (28 ; 528 ; 628), un fil proximal (32) opposé au fil distal (36 ; 590), et formant une partie centrale d'enroulement (34 ; 534 ; 634) enroulée autour du tuyau (24 ; 524 ; 602) entre le fil distal (36 ; 590) et le fil proximal (32) ;
un premier fil non chauffant (38 ; 538 ; 638) constitué du premier matériau métallique, le premier fil non chauffant (38 ; 538 ; 638) comprenant une première partie distale (91) connectée au fil proximal (32), et une première partie proximale (92) opposée à la première partie distale (91) ; et
un deuxième fil non chauffant (26 ; 526 ; 626) constitué d'un deuxième matériau métallique, le deuxième fil non chauffant (26 ; 526 ; 626) incluant une deuxième partie distale (93) connectée au fil distal (36 ; 590) de manière à former le thermocouple (28 ; 528 ; 628) ;
**caractérisé en ce que**
le sous-ensemble chauffage-capteur (20 ; 520 ; 610) comprend en outre un troisième fil non chauffant (70 ; 670) connecté à la première partie proximale (92), sachant que
le troisième fil non chauffant (70 ; 670) est constitué d'un matériau métallique identique au deuxième matériau métallique ou d'un matériau métallique ayant une résistivité volumique inférieure à celle du premier matériau métallique.

2. Le sous-ensemble chauffage-capteur (20 ; 520 ; 610) d'après la revendication 1,
sachant que le tuyau (24 ; 524 ; 602) est un tuyau isolant (24 ; 524 ; 602), et que
le deuxième fil non chauffant (26 ; 526 ; 626) est inséré au moins partiellement dans le tuyau isolant (24 ; 524 ; 602).

3. Le sous-ensemble chauffage-capteur (20 ; 520 ; 610) d'après la revendication 1 ou 2,
sachant que le premier matériau métallique est un matériau en alliage de chrome, et que
le deuxième matériau métallique est du nickel ou un alliage de nickel.

4. Le sous-ensemble chauffage-capteur (20 ; 520 ; 610) d'après une quelconque des revendications de 1 à 3,
sachant que le premier fil non chauffant (38 ; 538 ; 638) présente un diamètre de 2 à 4 fois plus grand que le diamètre du fil de chauffage (30 ; 530 ; 630).

5. Le sous-ensemble chauffage-capteur (20 ; 520 ; 610) d'après une quelconque des revendications de 1 à 4,
sachant que le troisième fil non chauffant (70 ; 670) présente un diamètre inférieur à celui du premier fil non chauffant (38 ; 538 ; 638).

6. Le sous-ensemble chauffage-capteur (20 ; 520 ; 610) d'après une quelconque des revendications de 1 à 5,
sachant que la partie centrale d'enroulement (34 ; 534 ; 634) présente approximativement une moitié de la longueur du tuyau (24 ; 524 ; 602), et que
une position centrale de la partie centrale d'enroulement (34 ; 534 ; 634) dans une direction axiale correspond essentiellement à une position centrale du tuyau (24 ; 524 ; 602) dans une direction axiale.

7. Le sous-ensemble chauffage-capteur (20 ; 520 ; 610) d'après une quelconque des revendications de 1 à 6,
sachant que le fil distal (36 ; 590) est constitué d'un fil plus épais que le premier matériau métallique formant la partie centrale d'enroulement (34 ; 534 ; 634).

8. Le sous-ensemble chauffage-capteur (20 ; 520 ; 610) d'après une quelconque des revendications de 1 à 7,
sachant que le premier fil non chauffant (38 ; 538 ; 638) n'a pas moins de 0,8 mm mais pas plus que 1,2 mm de diamètre,
le fil de chauffage (30 ; 530 ; 630) n'a pas moins de 0,2 mm mais pas plus que 0,45 mm de diamètre,
le troisième fil non chauffant (70 ; 670) ne dépasse pas 0,8 mm de diamètre.

9. Le sous-ensemble chauffage-capteur (20 ; 520 ; 610) d'après une quelconque des revendications de 1 à 8,
sachant que la partie centrale d'enroulement (34 ; 534 ; 634) n'est pas inférieure à 18 mm mais pas supérieure à 20 mm de longueur axiale, la partie centrale d'enroulement (34 ; 534 ; 634) étant distante du thermocouple (28 ; 528 ; 628) d'au moins 4 mm.

10. Le sous-ensemble chauffage-capteur (20 ; 520 ; 610) d'après une quelconque des revendications de 1 à 9,
sachant que le tuyau (24 ; 524 ; 602) n'est pas inférieur à environ 35 mm mais pas supérieur à environ 40 mm de longueur axiale,
la partie centrale d'enroulement (34 ; 534 ; 634) a une longueur axiale d'environ 19 mm, la partie centrale d'enroulement (34 ; 534 ; 634) incluant une extrémité de fil d'enroulement continue à partir du fil distal (36 ; 590), et
sachant que l'extrémité du fil d'enroulement est distante du thermocouple (28 ; 528 ; 628) d'environ 10 mm.

11. Le sous-ensemble chauffage-capteur (610) d'après la revendication 1, sachant que le tuyau (602) est un tuyau creux (602) définissant un trajet d'aspiration de soudure, et
sachant que le deuxième fil non chauffant (626) s'étend dans une direction axiale du tuyau creux à une position déviée du trajet d'aspiration de soudure.

12. Une cartouche de soudure (60 ; 510) comprenant :
une pointe (22 ; 522 ; 624) utilisée pour le brasage ;
un boîtier (62 ; 562 ; 662) comprenant une partie d'extrémité distale (64 ; 564) fixée à la pointe (22 ; 522 ; 624), et une partie d'extrémité proximale (68 ; 570) ayant au moins deux contacts électriques ;
le sous-ensemble chauffage-capteur (20 ; 520 ; 610) d'après une quelconque des revendications de 1 à 11 ;
sachant que le sous-ensemble chauffage-capteur (20 ; 520 ; 610) est installé dans le boîtier (62 ; 562 ; 662).

13. La cartouche de soudure (60 ; 510) d'après la revendication 12, sachant que la pointe (22 ; 522 ; 624) inclut une extrémité de pointe (46 ; 546) où de la soudure est appliquée, un manchon (542) relié au boîtier (62 ; 562 ; 662), et une partie centrale (544) entre l'extrémité de pointe (46 ; 546) et le manchon (542), et que
l'extrémité de pointe (46 ; 546), le manchon (542) et la partie centrale (544) définissent un alésage axial dans lequel le sous-ensemble chauffage-capteur (20 ; 520 ; 610) est stocké.
